(19) Europäisches Patentamt / European Patent Office / Office européen des brevets

(11) **EP 3 477 590 B1**

(12) **EUROPEAN PATENT SPECIFICATION**

(45) Date of publication and mention
of the grant of the patent:
**04.03.2020   Bulletin 2020/10**

(51) Int Cl.:
***G06T 7/00*** *(2017.01)*

(21) Application number: **18203366.2**

(22) Date of filing: **30.10.2018**

(54) **METHOD FOR IDENTIFYING A REGION OF INTEREST WITHIN A DIGITAL IMAGE**

VERFAHREN ZUR IDENTIFIZIERUNG EINER REGION VON INTERESSE INNERHALB EINES DIGITALEN BILDES

PROCÉDÉ POUR IDENTIFIER UNE RÉGION D'INTÉRÊT DANS UNE IMAGE NUMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.10.2017   IT 201700123523**

(43) Date of publication of application:
**01.05.2019   Bulletin 2019/18**

(73) Proprietor: **CMZ Sistemi Elettronici S.R.L.**
**31050 Vascon di Carbonera (TV) (IT)**

(72) Inventor: **FADEL, Giampaolo**
**31100 TREVISO (IT)**

(74) Representative: **Marchioro, Paolo**
**Studio Bonini S.r.l.**
**Corso Fogazzaro, 8**
**36100 Vicenza (IT)**

(56) References cited:
**EP-A2- 2 251 268**          **WO-A1-2016/155848**
**DE-A1-102004 040 164**

## Description

The invention relates to a method for identifying a region of interest within a digital image for the subsequent processing of the region of interest.

In particular, the method of the invention comprises identifying the region of interest within a digital image relating to at least one surface of a real object positioned in space.

It is well known that in the field of the processing of digital images it is at times necessary to limit the analysis to a restricted region thereof, both to limit the computation times, and to prevent the result of the processing from being compromised by the presence of a non-negligible level of noise in areas of the image that are not of interest.

Usually, in some applications, the regions of interest within a digital image correspond to the portions of the surface of a real object illuminated by the light radiation generated by a dedicated illuminator oriented towards the aforesaid surfaces to highlight some of their features.

These needs are observed above all in artificial vision systems applied to industrial production lines for the automatic control of the quality or of the defectiveness of the products being manufactured.

A prime example is an industrial system for labelling bottles, where the need of many companies is to apply the label either under a specific logo impressed in the glass, or equidistantly from the vertical junction lines, also known as "flash line" present in the bottle. The function of the artificial vision system, in this specific case, is to identify the position of the logo or of the junction lines around the bottle and, consequently, to pass this information to the plant configured to apply the aforesaid label.

In general, in the prior art, upon acquiring the digital image of the real object whose quality is to be verified, the region of interest is identified within that image with a manual approach.

In particular, for the manual definition of the aforesaid region of interest, the operator, using appropriate software instruments, can manually select the pixels of the image that represent the vertices of the same region of interest or alternatively can graphically trace its perimeter.

Only subsequently is the operator able to start the actual analysis of the digital image by means of appropriate algorithms limited to the aforesaid region of interest.

Disadvantageously, this manual approach determines a series of drawbacks presented below.

On one hand, indeed, the manual definition of the region of interest for each digital image acquired determines an inadmissible extension of processing times with respect to the current needs of industrial production.

On the other hand, if the operator establishes manually on a one-off basis, at the start of the production process, the portion of the digital image that represents its region of interest, this approach could disadvantageously entail a drastic decline in the processing precision of the image and consequently in the results obtained, because the actual region of interest could have a different position and dimensions for the various images acquired during the same production process with respect to those established *a priori*.

The European patent publication EP 2251268 discloses a system for detection of embossings (logos) and molding seams on bottles in labelling machines. The system comprises a lighting unit with a light screen for generating a light reflection on a bottle to be examined and a camera for detecting the light reflection. By means of areas of varying luminance being formed on the light screen, molding seams and embossings can be reliably detected over a large area of the bottle wall.

The German patent publication DE 102004040164 discloses a device for the sensing of structures (embossings) on the bodies of bottles or other containers having a light screen provided at a position on a side of a transporting path for the bottles and forming a light emitting surface which is concavely curved around at least one axis of curvature and which faces the bottle to be analysed. A camera scans the body of the bottle and creates a signal which corresponds to the light of the light screen reflected on the body of the container.

The International patent publication WO 2016/155848 discloses a device far orienting a bottle by means of detecting a bottle's sealing line using an inclined oriented stripe shaped light source/beam and a camera recording the stripe-shaped reflection pattern and correcting the bottle's angular position on the rotatable carrier accordingly.

The present invention intends to overcome all the aforementioned drawbacks.

In particular, one of the purposes of the invention is to define a method for identifying the region of interest within a digital image in a substantially automatic and objective way.

An additional purpose of the invention is to define a method of identifying the region of interest within a digital image that allows to shorten the setting times of the region of interest and of the entire artificial vision system.

A further purpose of the invention is to propose a method for identifying a region of interest that allows also to reduce the analysis times of the digital image.

Not the least purpose of the invention is to provide a method for identifying the region of interest within a digital image that allows to identify said region as precisely as possible on the basis of the setting of the vision system used, of the type and shape of the object to be analysed and of the quality of the images acquired.

The aforesaid purposes are achieved with the method for identifying a region of interest of a digital image according to the main claim.

Further features of the method of the invention are described in the dependent claims.

The aforesaid purposes, together with the advantages that will be mentioned farther on, will be readily apparent during the description of some preferred embodiments of the invention, which are given by way of non-limiting indication with reference to the accompanying drawings, where:

- Figure 1 shows a digital image in which a region of interest is identified;
- Figures 2a and 2b show, in real space, respectively an axonometric view and a top view of an artificial vision system and of an object to be analysed;
- Figure 3 shows the surface comprising a checkerboard of elements, in particular of squares, alternately of different colour, used for the calibration of the television camera;
- Figure 4 shows the arrangement, in real space and relatively to the artificial vision system of Figures 2a and 2b, of the surface of Figure 3;
- Figure 5 schematically shows a top view of the vision system during a first step of the procedure of identifying the real coordinates of the end points of the illuminator belonging to the artificial vision system of Figures 2a and 2b;
- Figure 6 shows a digital image acquired during the procedure of identifying the real coordinates of the end points of the illuminator belonging to the artificial vision system of Figures 2a and 2b;
- Figure 7 schematically shows a detail of Figure 5;
- Figure 8 schematically shows a side view of the vision system during a second step of the procedure of identifying the real coordinates of the end points of the illuminator belonging to the artificial vision system of Figures 2a and 2b.

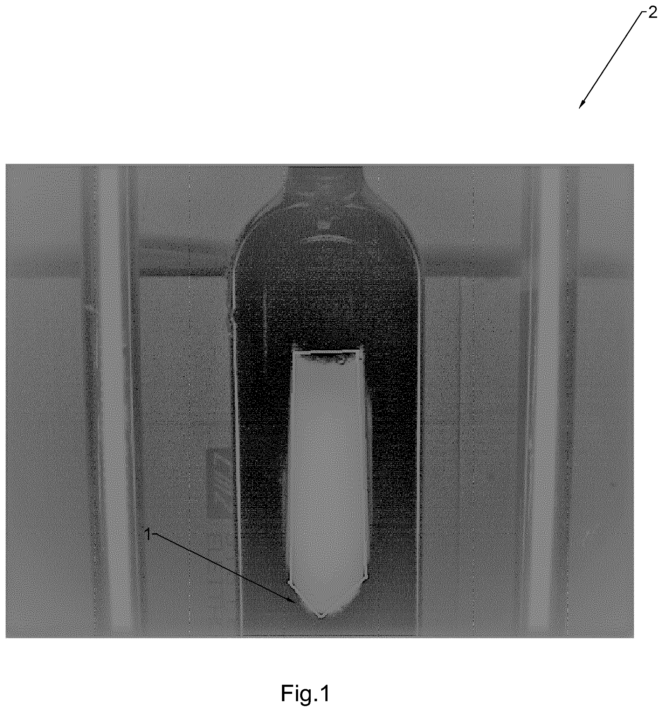

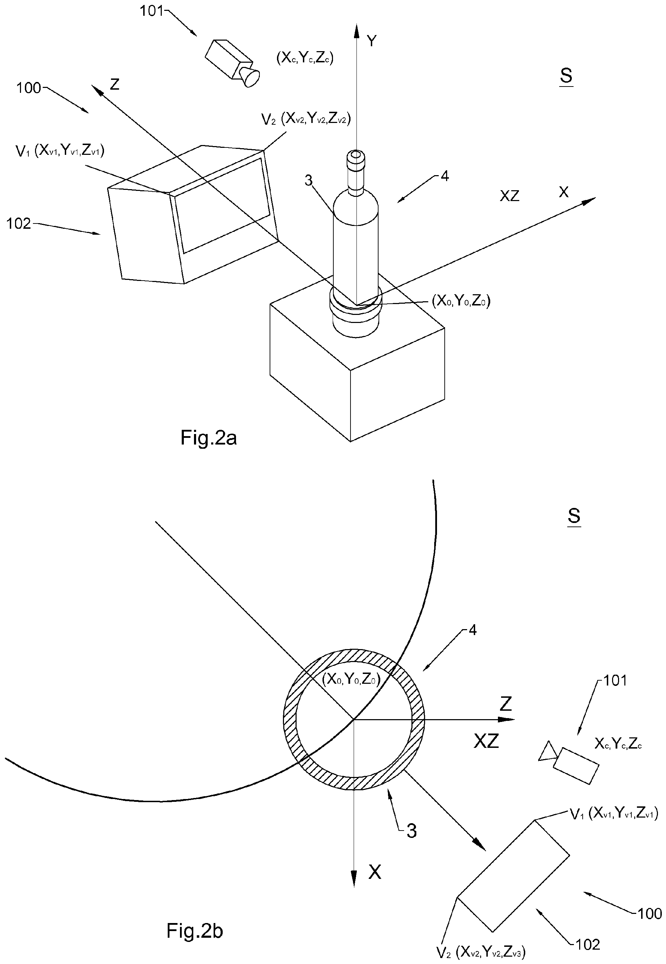

The method of the invention has the purpose of identifying a region of interest **1** within a digital image **2**, represented schematically in Figure 1, relating to at least one surface **3** of a real object **4**, in the example of the figure a bottle, located in real space **S** in a predefined position of coordinates $X_O$, $Y_O$ and $Z_O$, as shown in Figures 2a and 2b.

By convention, it is established that in the aforesaid real space **S** the axes X and Z having their origin in the predefined position $X_O$, $Y_O$ and $Z_O$ in which is placed the object **4** to be analysed define a horizontal plane xz and the axis Y represents the vertical direction in the same real space **S.**

Clearly the aforesaid predefined position of coordinates $X_O$, $Y_O$ and $Z_O$ identifies a real point of the aforesaid surface **3** of the real object **4**, which by convention could coincide with the central point of said surface **3** or with one of the base points of the surface **3**. It is important that upon defining which point of the aforesaid surface **3** has to be considered as the point that identifies said predefined position of coordinates $X_O$, $Y_O$ and $Z_O$, it is considered as the reference in the execution of the method of the invention, as described below. As has been explained above, it bears repeating that the importance of identifying said region of interest **1** within a digital image **2** consists, especially in industrial contexts, of the possibility of speeding up and simplifying the processing of the same image **2** relating to the industrial products being manufactured so as to automatically assess their quality and any defectiveness.

To implement said control, there is a known need of providing an "artificial vision system" **100** on an industrial plant. In particular, said artificial vision system **100** usually comprises at least one television camera **101** configured to acquire a digital image **2** of said real image **4**, at least at the aforesaid predefined position, and at least one illuminator **102** configured to illuminate at least partially the aforesaid surface **3** of the real object **4.**

In particular, in some applications, based on the shape and on the position of the aforesaid surface **3** of the real object **4**, the region of interest **1** to be analysed can vary and have smaller dimensions with respect to the entire field of view of the television camera **101.**

For example, in the case of the analysis of the junction lines of a bottle, as explained above, the portion of the digital image **2** of interest is the one relating in fact to the areas of the bottle in which the aforesaid junction lines should be located. Therefore, an illuminator **102** able to illuminate only said areas is used and positioned. Consequently, it is important to limit the region of the digital image **2** to be analysed to that which is actually illuminated by the aforesaid illuminator **102** and relating to one of the junction lines.

Returning to the method of the invention, in general, it comprises carrying out the operations described below.

First of all, it is necessary to define the position of coordinates $X_c$, $Y_c$ and $Z_c$ in real space **S** of the television camera **101**, which is configured to acquire the digital image **2** relating to the object **4** to be analysed.

This operation then comprises a calibration step, known in itself, which allows to determine the geometric relation existing between the points of the surface **3** of the object **4** in real space **S** and the pixels of the digital image **2** relating to the same surface **3**. This, consequently, allows to define the aforesaid position of coordinates $X_c$, $Y_c$ and $Z_c$ in real space **S** of the television camera **101.**

As was just mentioned, the procedure used to calibrate the television camera **101** is known, however for the sake of completeness it will be briefly presented below.

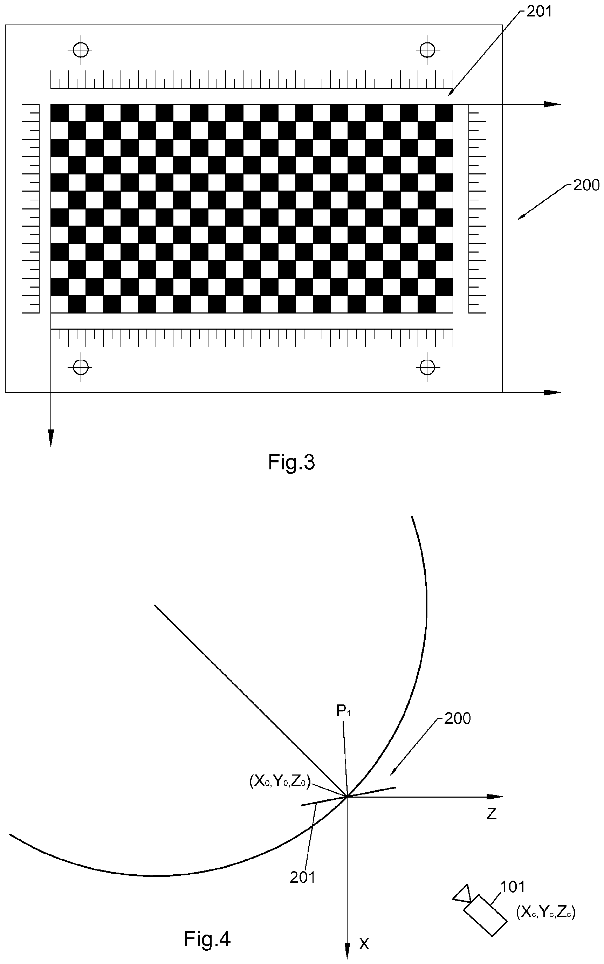

First of all, said calibration step for the definition of the position of the television camera **101** in real space **S** comprises providing a surface **200** on which is defined a checkerboard **201** of elements, in particular of squares, alternately of different colours, shown in Figure 3, in a first spatial position **P1**, as shown in Figure 4a, so that the surface **200** is substantially orthogonal to the horizontal plane xz and so that it falls within the field of view of the television camera **101**. In different embodiments of the invention, a grid of points may be used instead of the checkerboard **201** to carry out said calibration.

The calibration procedure than comprises acquiring a digital image by means of the television camera **101** and relating to the aforesaid checkerboard **201**.

Having available said digital image relating to the checkerboard **201** located in at least one position **P1** of real space **S**, the calibration procedure comprises analysing its content by means of an appropriate calibration algorithm so as to calculate the real coordinates of at least two elements of the checkerboard **201** starting from the virtual coordinates (position of the pixels) of the same elements considered, derived from the acquired digital image.

To allow deriving the real coordinates of these two elements, it is clearly necessary, in addition to having available the virtual coordinates of said elements for the digital image considered, to know *a priori* the real dimension of the checkerboard **201**, in particular the dimensions of the various elements and the distances between them.

As stated, said calibration procedure then allows to define geometrically the relationship between the coordinates 2D (position of the pixels within the image) of the elements of the checkerboard **201** in the image plane and the same real elements 3D (real coordinates) of the same checkerboard **201** in real space **S**.

Once said relation is defined, the position in real space **S** of the television camera **101** used to acquire said digital images can be derived immediately.

Then, upon having available the real position of coordinates $X_c$, $Y_c$ and $Z_c$ of the television camera **101** in real space **S** and the aforesaid geometric relationship, the method of the invention comprises defining also the positions of real coordinates $X_{V1}$, $Y_{V1}$, and $Z_{V1}$ and $X_{V2}$, $Y_{V2}$ and $Z_{V2}$ in real space **S** of at least two end points $V_1$ and $V_2$ of the illuminator **102**.

More specifically, it is known that, in artificial vision systems **100**, an illuminator **102** has a two-dimensional surface that emits a light radiation directed in a direct or indirect manner towards a surface **3** of an object **4** to be analysed. These illuminators **102**, based on the specific application, can have triangular, quadrangular or elliptical/circular shape of which it is necessary to know at least three end or vertex points $V_1$, $V_2$,...$V_n$ to define its shape. However, considering the more generic case in which the illuminator **102** could be a simple illumination line, the end points $V_1$, $V_2$ necessary for its definition could be just two.

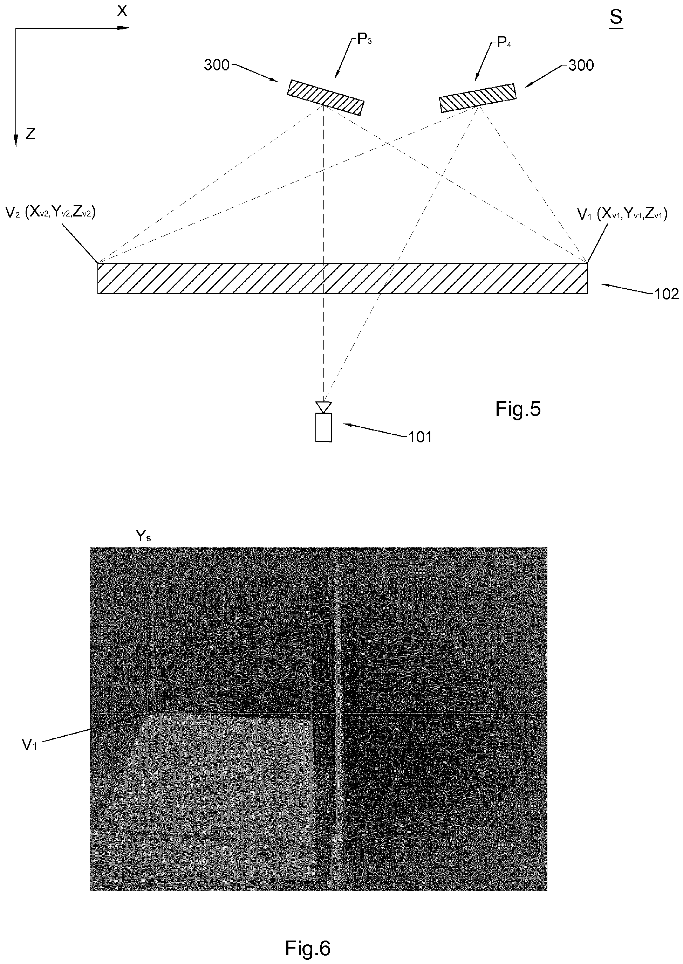

According to a first embodiment of the invention, the method proposed by the invention, to be able to determine the real position of each of the aforesaid end points $V_1$, $V_2$, comprises for each of them placing a mirror surface **300** in a first spatial position **P3**, shown in Figure 5, so that the mirror surface **300** is substantially orthogonal to the horizontal plane xz and is inside the field of view of the television camera **101**.

Upon positioning said mirror surface **300**, the method comprises acquiring a first flow of digital images by means of the television camera **101** until acquiring a first digital image in which the end point $V_1$ or $V_2$ is in superposition with the vertical axis of symmetry $Y_s$ of the mirror surface **300**. For greater clarity, see, in Figure 6, an example of said superposition in a digital image. This superposition, in particular, is obtained rotating the same mirror surface **300** around the vertical axis of symmetry $Y_s$ in a first angular position $\theta_3$ relative to the television camera **101**.

The method at this point comprises memorising the position of the pixel of the aforesaid first digital image in which said superposition occurred.

According to the invention, said operations have to be repeated at least a second time.

In particular, the method comprises placing the mirror surface **300** in a second spatial position **P4**, shown in Figure 5, distinct from the first spatial position **P3**, so that in this case as well the same mirror surface **300** is substantially orthogonal to the horizontal plane xz and falls within the field of view of said television camera **101**.

In this case, too, the method subsequently comprises acquiring a second flow of digital images by means of the same television camera **101** until acquiring a second image in which the same end point $V_1$ or $V_2$ is in superposition with the vertical axis of symmetry $Y_s$ of the mirror surface **300**.

For the second image, too, the superposition is obtained rotating the mirror surface **300** around the vertical axis of symmetry $Y_s$ in a second angular position $\theta_4$ relative to the television camera **101**.

Then, the position of the pixel of the second digital image in which the aforesaid superposition is observed is stored.

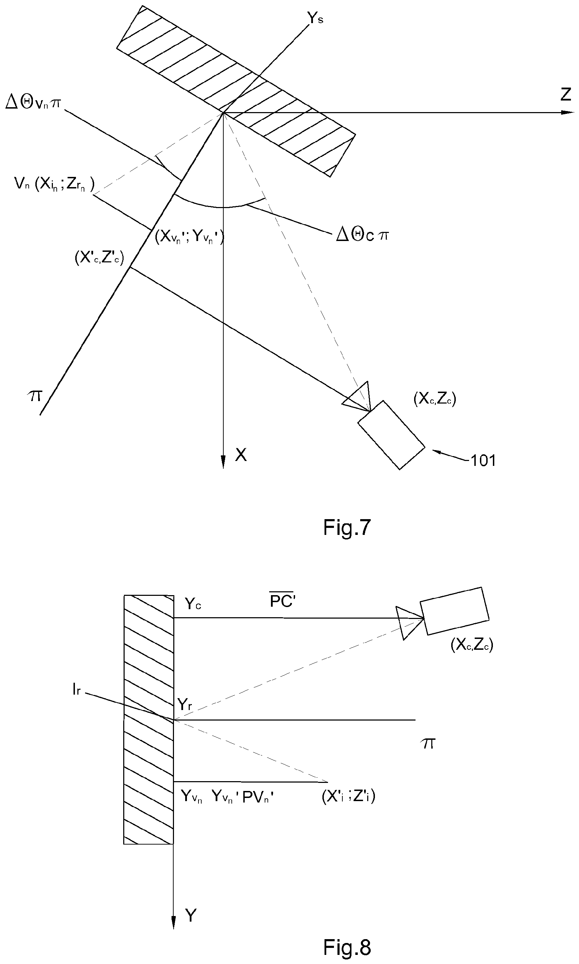

Moreover, at this point it is necessary to know the real angles of reflection $\Delta\theta_{Vn\pi}$ identifiable between the light beam originated from the end point $V_1$ and $V_2$ of the illuminator **102** and the projection plane $\pi$ defined by the vertical axis of symmetry $Y_s$ and by the normal to the mirror surface **300** located respectively in the first and in the second angular position **P3** and **P4**. The definition of said angles of reflection $\Delta\theta_{Vn\pi}$ is facilitated by the fact that they correspond respectively to the related real angle $\Delta\theta_{C\pi}$ between the television camera **101** and the aforesaid projection plane $\pi$ respectively in the two positions **P3** and **P4**, due to the mirror reflection property. The representation of said angles is presented schematically in Figure 7.

Upon determining the aforesaid data for all the end points $V_1$ and $V_2$ considered, the method comprises calculating the related real coordinates $X_{V1}$, $Y_{V1}$, and $Z_{V1}$ and $X_{V2}$, $Y_{V2}$ and $Z_{V2}$, by a triangulation method.

In yet more detail, according to the preferred embodiment of the method of the invention, for each end point $V_1$ and $V_2$, the aforesaid triangulation method is used to calculate the spatial coordinates $X_{V1}$ and $X_{V2}$, and $Z_{V1}$ and $Z_{V2}$ respectively along the axis X and along the axis Z and deriving instead the spatial coordinate $Y_{V1}$

and $Y_{V2}$ along the axis Y in the way described below.

The method comprises, indeed, projecting the real coordinates $X_{V1}$, $X_{V2}$, $Z_{V1}$, $Z_{V2}$ and $X_c$, $Z_c$ along the axes X and Z respectively of the end points $V_1$ and $V_2$ and the coordinates $X_c$, $Z_c$ of the television camera **101** on the aforesaid projection plane $\pi$ defined by the axis of symmetry $Y_s$ and by the normal to the mirror surface **300** thus obtaining the projected spatial coordinates $X_{V1}$', $X_{V2}$', $Z_{V1}$', $Z_{V2}$' and $X_c$', $Z_c$'. This operation is schematically represented in Figure 8.

Subsequently, the distance $PV_n$' between the projected spatial coordinates $X_{V1}$', $X_{V2}$', $Z_{V1}$', $Z_{V2}$' of each of the end points $V_1$, $V_2$ and the mirror surface **300** is calculated. Moreover, the distance PC' is calculated between the same projected spatial coordinates $X_c$', $Z_c$' relating to the television camera **101** and the mirror surface **300**.

Said two distances $PV_n$' and PC' represent the trajectory projected on the aforesaid projection plane $\pi$ that the light beam follows realistically between the illuminator **102** and the television camera **101** by reflection in a real reflection point $i_r$ on the aforesaid mirror surface **300**.

The spatial coordinates $Y_{Vn}$ of each end point $V_1$ and $V_2$ along the axis Y are then derived with the formula:

$$ Yvn = \frac{PVn\prime}{PC\prime}(Yr - Yc) + Yr, $$

where $Y_r$ and $Y_c$ are respectively the spatial coordinates along the axis Y of the real position of the reflection point $i_r$ identified and of the television camera **101**. In particular, $Y_c$ is known from the calibration while $Y_r$ is derived by triangulation of the digital images acquired. $Y_{Vn}$ represents the spatial coordinate along the axis Y of the $n^{th}$ end point $V_1$, $V_2$...$V_n$ considered.

Alternatively, a second embodiment of the invention could comprise, for the determination of the positions of coordinates $X_{V1}$, $Y_{V1}$, $Z_{V1}$ and $X_{V2}$, $Y_{V2}$ and $Z_{V2}$ in real space **S** of the end points $V_1$ and $V_2$, placing the aforesaid mirror surface **300** in a first spatial position **P3** so that it is substantially orthogonal to the horizontal plane xz and falls within the field of view of said television camera **101** and acquiring a first flow of digital images until acquiring a first digital image in which a predefined real point PP of the illuminator **102** selected *a priori* is positioned on the same digital image in superposition with the vertical axis of symmetry $Y_s$ of the mirror surface **300**. In this case, too, the aforesaid superposition is obtained rotating the mirror surface **300** around the vertical axis of symmetry $Y_s$ in a first angular position $\theta_3$ relative to the position of the television camera **101**.

As in the previous case, the method then comprises storing the position of the aforesaid pixel in which said superposition is observed and comprises repeating the aforesaid operations at least for a second image.

More specifically, the method comprises placing the mirror surface **300** in a second spatial position **P4**, distinct from the first spatial position **P3**, so that in this case as well the mirror surface **300** is substantially orthogonal to the horizontal plane xz and falls within the field of view of said television camera **101**.

Subsequently, a second flow of digital images is acquired by means of the television camera **101** until acquiring a second image in which the predefined real point PP of the illuminator **102** is positioned on the second digital image in superposition with the vertical axis of symmetry $Y_s$ of the mirror surface **300**.

In this case, too, the superposition is obtained rotating the mirror surface **300** around the vertical axis of symmetry $Y_s$ in a second angular position $\theta_4$ relative to the position of the television camera **101**.

For these second images, too, the method comprises storing the position of the pixel in which said superposition is observed and it further comprises deriving the real angles of reflection $\Delta\theta_{PP\pi}$ identifiable between the light beam originated from the predefined point PP of the illuminator **102** and the projection plane $\pi$ defined by the vertical axis of symmetry $Y_s$ and by the normal to the mirror surface **300** located respectively in the first and in the second angular position **P3** and **P4**.

In this case, too, due to the mirror reflection property, each real angle of reflection $\Delta\theta_{PP\pi}$ corresponds to the related real angle $\Delta\theta_{C\pi}$ between the television camera **101** and the aforesaid projection plane $\pi$.

At this point, according to this alternative embodiment of the invention, the method comprises determining the positions in real space **S** of the aforesaid predefined point PP starting from the position of the pixels of the image in which said superposition is observed and from the aforesaid real angle of reflection $\Delta\theta_{PP\pi}$ of the two images, by means of a triangulation method.

Lastly, the method comprises calculating the real position of each of the end points $V_1$ and $V_2$ of the illuminator **102** starting from the absolute real position of the aforesaid predefined point PP and knowing *a priori* the real distance between each of these end points $V_1$ and $V_2$ and the same predefined point PP.

Having reached this point, having available the real positions of coordinates $X_{V1}$, $Y_{V1}$, $Z_{V1}$ and $X_{V2}$, $Y_{V2}$ and $Z_{V2}$ for all end points $V_1$ and $V_2$ of the illuminator **102** considered, using either one of the two alternative procedures just described, and also having available the real position of the television camera **101**, the method of the invention comprises carrying out the following operations for each of the aforesaid end points $V_1$ and $V_2$.

First of all, the method comprises calculating the real distance $RV_i$ between each point i of spatial coordinates $X_i$, $Y_i$, $Z_i$ belonging to the surface **3** of the real object **4** and the position of said end point $V_1$ and $V_2$.

Incidentally, the spatial coordinates $X_i$, $Y_i$, $Z_i$, relative to the predefined position $X_o$, $Y_o$ and $Z_o$, of each point i in real space **S** are known *a priori,* the shape of the surface **3** being known *a priori.*

In addition, the real distance $RC_i$ is calculated between each of the points i of the surface **3** and the real position of the television camera **101**.

Once these distances are calculated, for each point i the sum $S_{VC}$ between the real distance $RV_i$ and the real distance $RC_i$ is calculated.

The method subsequently comprises identifying among all the sums $S_{VC}$ calculated the sum $S_{VCMin}$ with the lowest value.

The logic of this operation is based on the fact that, by definition, a light beam reflected on a surface **3** tends to travel from its own origin (end point $V_1$, $V_2$ of the illuminator **102**) the shortest segment to reach a determined final point, which in this case corresponds to the television camera **101**.

Hence, selecting, among all the sums $S_{VC}$, the sum $S_{VCMin}$ with the smallest value allows to identify the theoretically most plausible path the light beam travels from an end point $V_1$, $V_2$ of the illuminator **102**, through the reflection on the surface **3** of the object **4**, until reaching the television camera **101**.

For this reason, once the shortest distance $S_{VCMin}$ is defined, the related point i is defined as real reflection point $i_r$ of the light coming from the end point $V_1$ and $V_2$ on the surface **3** of the real object **4**.

By means of the calibration operation described above relating to the television camera **101**, the method of the invention subsequently comprises defining to which pixel $p_r$ of the acquired digital image the real reflection point $i_r$ corresponds.

Lastly, the method of the invention comprises, upon identifying the pixels $p_r$ in the digital image for all the aforesaid end points $V_1$ and $V_2$ considered and the related real reflection points $i_r$ on the surface **3** of the object **4**, to define the region of interest **1** in the digital image **2** by defining the latter inside the perimeter obtained from the union of the aforesaid pixels $p_r$ of the same digital image **2**.

According to the invention, preferably, the calculation of the real distances $RV_i$ and $RC_i$ respectively between each point i of the surface **3** of the real object **4** and the real position of each of the end points $V_1$ and $V_2$ and between each point i and the real position of the television camera **101** comprises using the following formulas:

$$RVi = \sqrt{(Xvn - Xi)^2 - (Zvn - Zi)^2}$$

$$RCi = \sqrt{(Xc - Xi)^2 - (Zc - Zi)^2}$$

In these formulas in particular, the values $X_c$, $X_{Vn}$, $X_i$ and $Z_c$, $Z_{Vn}$, $Z_i$ represent respectively the real coordinates of the television camera **101**, the real coordinates of each of the n end points $V_1$ and $V_2$ considered and the real coordinates of the point i along the axis X and along the axis Y.

In other words, these formulas allow to calculate the real distances $RV_i$ and $RC_i$ relative to the horizontal plane xz.

Upon calculating said differences $RV_i$ and $RC_i$ and the sums $S_{VC}$ and upon identifying for each end point $V_1$ and $V_2$ the sum $S_{VCMin}$ with the smallest value, to identify the value of the coordinate $Y_r$ of the related reflection point $i_r$, the method of the invention comprises projecting its own values $RC_i$ and $RV_i$ on the projection plane $\pi1$ defined by the axis Y and by the normal to the surface 3 so as to obtain the related projected values $RC_i'$ and $RV_i'$.

Upon identifying the aforesaid two projected segments $RC_i'$ and $RV_i'$, the method comprises calculating $Y_r$ for each reflection point $i_r$ with the formula:

$$Yir = \frac{YvnRCi' + YcRVi'}{RCi' + RVi'}$$

where $Y_c$, $Y_{Vn}$ are respectively the real coordinates of the television camera **101** and of each of the n end points $V_1$ and $V_2$ along the axis Y.

This formula represents the proportionality relationship that exists between the two right triangles, defined by the formula

$$\frac{RCi'}{Yc + Yir} = \frac{RVi'}{Yir + Yvn}$$

In even more detail, the aforesaid projected values $RCi'$ and $RVi'$ are obtained by defining the angle $\Delta\theta_{C\pi1}$ between the television camera **101** and the aforesaid projection plane $\pi1$ and by subsequently calculating them according to the formulas:

$$RVi' = RVicos\Delta\theta PVn$$

$$RCi' = RCicos\Delta\theta PVn$$

where $\Delta\theta PVn$ represents the angle between the aforesaid projection plane $\pi1$ and each end plane $V_1$ and $V_2$ and where $\Delta\theta PVn = \Delta\theta C\pi1$. The latter relationship is valid for the mirror reflection principle.

At this point, as stated above, the real coordinates of all the real reflection points $i_r$ of the light on the surface **3** of the object **4** are available, said light originating from the related end points $V_1$ and $V_2$ of the illuminator **102**. As stated above, proceeding with the conversion of the real coordinates of the various reflection points $i_r$ in the related positions of the pixels in the digital image **2**, the vertices $p_r$ of the reflection of the light on the digital image **2** are established, thus allowing to define the region of interest **1** confined within the perimeter defined by the aforesaid vertices $p_r$.

Therefore, once the aforesaid region of interest **1** is defined, the actual analysis of the image **2** can be conducted for the definition of the quality and/or of any defectiveness of the object **4** represented and the execution of said analysis can advantageously be limited to the portion of image that actually is illuminated by the light coming from the illuminator **102**.

Clearly, most of the operations of the method of the invention are carried out by means of an electronic processing device in which a computer program product is present comprising a portion of software code loaded in the memory of the electronic processing device itself, when said portion of software code is executed.

Thus, in view of the above the method of the invention is deemed to achieve all of its set purposes.

In particular, the purpose of the invention of defining a method for identifying the region of interest within a digital image in a substantially automatic and objective way is achieved.

An additional achieved purpose of the invention is to define a method of identifying the region of interest within a digital image that allows to shorten the setting times of the region of interest and of the entire artificial vision system. Also achieved is the purpose of the invention of proposing a method for identifying a region of interest that allows also to reduce the analysis times of the digital image.

Lastly, also achieved is the purpose of the invention of providing a method for identifying the region of interest within a digital image that allows to identify said region as precisely as possible on the basis of the setting of the vision system used and of the quality of the images acquired.

**Claims**

1. Method for identifying a region of interest (1) within a digital image (2) relating to at least one surface (3) of a real object (4), said surface (3) being of the light-reflecting type, said real object (4) being located in space (S) in a predefined position $(X_o, Y_o, Z_o)$, where the axes X and Z having origin in said predefined position $(X_o, Y_o, Z_o)$ define a horizontal plane xz and the axis Y represents the vertical direction in real space (S), the triads of spatial coordinates $(X_i, Y_i, Z_i)$ of each point (i) belonging to said surface (3) relative to said predefined position $(X_o, Y_o, Z_o)$ being known *a priori,* the acquisition of said digital image (2) being carried out by means of an artificial vision system (100) comprising at least one television camera (101) configured to acquire said digital image (2) and at least one illuminator (102) provided with a two-dimensional surface comprising at least three vertex points $(V_1, V_2, V_3)$, said two-dimensional surface being configured to emit a light radiation so as to illuminate at least partially said surface (3) of said real object (4), **characterised in that** it comprises the following operations:

a) executing a calibration step to determine the geometric relation existing between said points (i) of said surface (3) of said real object (4) in real space (S) and the pixels of said digital image (2) relating to said surface (3);

b) defining the position $(X_c, Y_c, Z_c)$ in real space (S) of said at least one television camera (101);

c) defining the positions $(X_{V1}, Y_{V1}, Z_{V1}, X_{V2}, Y_{V2}, Z_{V2})$ in real space (S) of said at least three vertex points $(V_1, V_2, V_3)$ of said two-dimensional surface of said at least one illuminator (102);

d) for each of said at least three vertex points $(V_1, V_2, V_3)$ of said two-dimensional surface of said illuminator (102):

- calculating the real distance $(RV_i)$ between each of said points (i) and the position of said vertex point $(V_1, V_2, V_3)$;

- calculating the real distance $(RC_i)$ between each of said points (i) and the position of said at least one television camera (101);
- calculating the sum $(S_{VC})$ between said two real distances $(RV_i, RC_i)$ for each of said points (i);
- identifying the sum $(S_{VCMin})$ with the lowest value among said calculated sums $(S_{VC})$;
- defining as real reflection point $(i_r)$ of the light coming from said vertex point $(V_1, V_2, V_3)$ of said illuminator (102) on the surface (3) of said real object (4) the point (i) of said surface (3) in which said sum $(S_{VCMin})$ with lowest value is obtained;
- converting by means of said geometric relation said real reflection point $(i_r)$ identified for said vertex point $(V_1, V_2, V_3)$ into a virtual reflection point $(p_r)$ in said digital image (2);

e) defining said region of interest (1) between said at least three virtual reflection points $(p_r)$.

2. Method according to claim 1, wherein said real distances $(RV_i, RC_i)$ respectively between each point (i) belonging to said surface (3) of said real object (4) and the real position $(X_{V1}, Y_{V1}, Z_{V1}, X_{V2}, Y_{V2}, Z_{V2})$ of each of said vertex points $(V_1, V_2, V_3)$ and between each of said points (i) and the real position $(X_c, Y_c, Z_c)$ of said television camera (101) are calculated by means of the following formulas:

$$RCi = \sqrt{(Xc - Xi)^2 - (Zc - Zi)^2}$$

$$RVi = \sqrt{(Xvn - Xi)^2 - (Zvn - Zi)^2},$$

where $X_c$, $X_{Vn}$, $X_i$ and $Z_c$, $Z_{Vn}$, $Z_i$ represent respectively the real coordinates of said television camera (101), the real coordinates of each of the n at least three vertex points ($V_1$, $V_2$, $V_3$) and the real coordinates of said point (i) of said surface (3) along the axis X and along the axis Z.

3. Method according to claim 2, wherein the definition of the real coordinate ($Y_{ir}$) along the vertical axis Y of said real reflection point ($i_r$), comprises:

- projecting for each real reflection point ($i_r$) the values of said real distances ($RC_i$, $RV_i$) on the projection plane ($\pi 1$) defined by said axis Y and by the normal to said surface (3) so as to obtain the values of said projected real distances ($RC_i'$, $RV_i'$);
- calculating said real coordinate ($Y_{ir}$) along the vertical axis Y for each reflection point ($i_r$) by means of the formula:

$$Yir = \frac{YvnRCi' + YcRVi'}{RCi' + RVi'}$$

where $Y_c$ and $Y_{Vn}$ are respectively the real coordinates of the television camera (101) and the real coordinates of each of the $n^{th}$ vertex points ($V_1$, $V_2$, $V_3$) along the axis Y.

4. Method according to claim 3, wherein the values of said projected real distances ($RC_i'$, $RV_i'$) are obtained by defining the angle ($\Delta\theta_{C\pi}$) between said television camera (101) and said projection plane ($\pi$) and by calculating said projected real distances ($RC_i'$, $RV_i'$) according to the formulas:

$$RVi' = RVi \, cos\Delta\theta PVn$$

$$RCi' = RCi \, cos\Delta\theta PVn$$

where $\Delta\theta PVn$ represents the angle between said projection plane ($\pi$) and said vertex point ($V_1$, $V_2$, $V_3$) and where $\Delta\theta PVn = \Delta\theta CP$.

5. Method according to any one of the preceding claims, wherein said step of defining the positions in real space (S) of at least said three vertex points ($V_1$, $V_2$, $V_3$) of said at least one illuminator (102) comprises for each of said three vertex points ($V_1$, $V_2$, $V_3$):

- placing a mirror surface (300) in a first spatial position (P3) so that said mirror surface (300) is substantially orthogonal to said horizontal plane xz and falls within the field of view of said television camera (101);
- acquiring a first flow of digital images by means of said television camera (101) until acquiring a first digital image in which said vertex point ($V_1$, $V_2$, $V_3$) is in superposition with the vertical axis of symmetry ($Y_s$) of said mirror surface (300), said superposition being obtained by rotating said mirror surface (300) around said vertical axis of symmetry ($Y_s$) in a first angular position ($\theta_3$);
- placing said mirror surface (300) in a second spatial position (P4), distinct from said first spatial position (P3), so that said mirror surface (300) is substantially orthogonal to said horizontal plane xz and falls within the field of view of said television camera (101);
- acquiring a second flow of digital images by means of said television camera (101) until acquiring a second image in which said vertex point ($V_1$, $V_2$, $V_3$) is in superposition with said vertical axis of symmetry ($Y_s$) of said mirror surface (300), said superposition being obtained by rotating said mirror surface (300) around said vertical axis of symmetry ($Y_s$) in a second angular position ($\theta_4$);
- for both said first and said second images, deriving the virtual coordinates of said vertex point ($V_1$, $V_2$, $V_3$) and deriving the real angles of reflection ($\Delta\theta_{Vn\pi}$) identifiable between the light beam originated from said vertex point ($V_1$, $V_2$, $V_3$) of said illuminator (102) and the projection plane ($\pi$) defined by said vertical axis of symmetry ($Y_s$) and by the normal to said mirror surface (300) placed in said first and in said second position (P3, P4), where said real angles of reflection ($\Delta\theta_{Vn\pi}$) correspond respectively to the real angles ($\Delta\theta_{C\pi}$) between said television camera (101) and said projection plane ($\pi$) in said first and in said second position (P3, P4), because of the mirror reflection property;
- determining the real coordinates ($X_{V1}$, $Y_{V1}$, $Z_{V1}$, $X_{V2}$, $Y_{V2}$, $Z_{V2}$) of said vertex point ($V_1$, $V_2$, $V_3$) starting from said virtual coordinates of said vertex point ($V_1$, $V_2$, $V_3$) and from said real angle of reflection ($\Delta\theta_{Vn\pi}$) derived at least from said first and said second digital image, by means of a triangulation method.

6. Method according to claim 5, wherein said operation of determining said real coordinates ($X_{V1}$, $Y_{V1}$, $Z_{V1}$, $X_{V2}$, $Y_{V2}$, $Z_{V2}$) for each of said three vertex points ($V_1$, $V_2$, $V_3$) comprises:

- calculating the spatial coordinates ($X_{V1}$, $X_{V2}$, $Z_{V1}$, $Z_{V2}$) along the axes X and Z using a triangulation method starting from said virtual coordinates of said vertex point ($V_1$, $V_2$, $V_3$) in said at least two digital images;
- deriving the spatial coordinate ($Y_{V1}$, $Y_{V2}$) of said three vertex points ($V_1$, $V_2$, $V_3$) along the axis Y:

> - projecting the spatial coordinates ($X_{V1}$, $X_{V2}$, $Z_{V1}$, $Z_{V2}$, $X_c$, $Z_c$) along the axes X and Z respectively of said vertex point ($V_1$, $V_2$, $V_3$) and of said television camera (101) on the projection plane ($\pi$) defined by said vertical axis of symmetry ($Y_s$) and by the normal to said mirror surface (300) obtaining the projected spatial coordinates ($X_{V1}'$, $X_{V2}'$, $Z_{V1}'$, $Z_{V2}'$, $Xc'$, $Zc'$) of said vertex point ($V_1$, $V_2$, $V_3$) and of said television camera (101);
> - calculating the distance ($PV_n'$) between said projected spatial coordinates ($X_{V1}'$, $X_{V2}'$, $Z_{V1}'$, $Z_{V2}'$) of said vertex point ($V_1$, $V_2$, $V_3$) and said mirror surface (300) and the distance ($PC'$) between said projected spatial coordinates ($Xc'$, $Zc'$) of said television camera (101) and said mirror surface (300);
> - calculating the spatial coordinate ($Y_{V1}$, $Y_{V2}$) along the axis Y by means of the formula:

$$YVn = \frac{PVn'}{PC'}(Yr - Yc) + Yr,$$

> where $Y_r$ and $Y_c$ represent respectively the value of the spatial coordinates along the axis Y of the reflection point on said mirror surface (300) of the light beam coming from the $n^{th}$ of said three vertex points ($V_1$, $V_2$, $V_3$) and of said television camera (101).

**7.** Method according to any one of the claims 1 to 4, wherein said step of defining the positions in real space (S) of at least said three vertex points ($V_1$, $V_2$, $V_3$) of said at least one illuminator (102) comprises:

> - placing a mirror surface (300) in a first spatial position (P3) so that said mirror surface (300) is substantially orthogonal to said horizontal plane xz and falls within the field of view of said television camera (101);
> - acquiring a first flow of digital images by means of said television camera (101) until acquiring a first digital image in which a predefined real point (PP) of said illuminator (102) is positioned on said first digital image in superposition with the vertical axis of symmetry ($Y_s$) of said mirror surface (300), said superposition being obtained by rotating said mirror surface (300) according to said vertical axis of symmetry ($Y_s$) in a first angular position ($\theta_3$);
- placing said mirror surface (200) in a second spatial position (P4), distinct from said first spatial position (P3), so that said mirror surface (300) is substantially orthogonal to said horizontal plane xz and falls within the field of view of said television camera (101);
- acquiring a second flow of digital images by means of said television camera (101) until acquiring a second image in which said predefined real point (PP) of said illuminator (102) is on said second digital image in superposition with the vertical axis of symmetry ($Y_s$) of said mirror surface (300), said superposition being obtained by rotating said mirror surface (300) according to said vertical axis of symmetry ($Y_s$) in a second angular position ($\theta_4$);
- for both said first and said second images, deriving the virtual coordinates of said predefined point and deriving the real angles of reflection ($\Delta\theta_{PP\pi}$) identifiable between the light beam originated from said predefined real point (PP) of said illuminator (102) and the projection plane ($\pi$) defined by said vertical axis of symmetry ($Y_s$) and by the normal to said mirror surface (300) placed in said first and in said second position (P3, P4), where said real angles of reflection ($\Delta\theta_{PP\pi}$) correspond respectively to the real angles ($\Delta\theta_{C\pi}$) between said television camera (101) and said projection plane ($\pi$) in said first and in said second position (P3, P4), because of the mirror reflection property;
- determining the real coordinates of said predefined real point (PP) starting from said virtual coordinates of said predefined real point (PP) and from said real angle of reflection ($\Delta\theta_{PP\pi}$) derived at least from said first and said second digital image, by means of a triangulation method;
- calculating the absolute real position of said three vertex points ($V_1$, $V_2$, $V_3$) knowing the real coordinates of said predefined real point (PP) and knowing *a priori* the real distance between said three vertex points ($V_1$, $V_2$, $V_3$) and said predefined point.

**8.** Method according to any one of the preceding claims, wherein said operation of defining the position ($X_c$, $Y_c$, $Z_c$) in real space (S) of said at least one television camera (101) comprises:

> - placing a surface (200) on which a checkerboard of elements (201) is defined in a first spatial position (P1) so that said surface (200) is substantially orthogonal to said horizontal plane xz and falls within the field of view of said television camera (101);

- acquiring a first digital image by means of said television camera (101);

- placing said surface (200), on which is defined said checkerboard of elements (201), in a second spatial position (P2), distinct from said first spatial position (P1), so that said surface (200) is substantially orthogonal to said horizontal plane xz and falls within the field of view of said television camera (101);

- acquiring a second digital image by means of said television camera (101);

- by means of a calibration algorithm, calculating the real coordinates of at least two elements of said checkerboard (201) starting from the virtual coordinates of said at least two elements derived from said first and said second digital image and the real dimensions of said checkerboard (201) being known, in particular the real distances between said elements.

9. Computer program product comprising a portion of software code loaded in the memory of an electronic processing device to carry out the operations of the method according to any one of the claims 1 to 8 when said portion of software code is executed in said electronic processing device.

**Patentansprüche**

1. Verfahren zur Identifizierung eines interessierenden Bereichs (1) innerhalb eines digitalen Bildes (2) bezüglich wenigstens einer Oberfläche (3) eines realen Objekts (4), wobei die Oberfläche (3) vom lichtreflektierenden Typ ist, wobei das reale Objekt (4) in einem Raum (S) an einer vordefinierten Position ($X_o$, $Y_o$, $Z_o$) angeordnet ist, wobei die Achsen X und Z, die ihren Ursprung an derselben vordefinierten Position ($X_o$, $Y_o$, $Z_o$) haben, eine horizontale xz-Ebene definieren und die Y-Achse die vertikale Richtung im realen Raum (S) darstellt, wobei die drei Raumkoordinaten ($X_i$, $Y_i$, $Z_i$) eines jeden Punktes (i) zu der Oberfläche (3) relativ zu der vordefinierten Position ($X_o$, $Y_o$, $Z_o$) gehören, die *a priori* bekannt ist, wobei das Erfassen des digitalen Bildes (2) mittels eines künstlichen Sichtsystems (100) ausgeführt wird, das wenigstens eine Fernsehkamera (101) umfasst, die konfiguriert ist, um das digitale Bild (2) zu erfassen, und wenigstens einen Beamer (102), der mit einer zweidimensionalen Oberfläche versehen ist, die wenigstens drei Scheitelpunkte ($V_1$, $V_2$, $V_3$) umfasst, wobei die zweidimensionale Oberfläche konfiguriert ist, um eine Lichtstrahlung zu emittieren, so dass die Oberfläche (3) des realen Objekts (4) wenigstens teilweise beleuchtet wird, **dadurch gekennzeichnet, dass** es folgende Schritte umfasst:

a) Ausführen eines Kalibrierschrittes zur Bestimmung der geometrischen Beziehung zwischen den Punkten (i) der Oberfläche (3) des realen Objekts (4) im realen Raum (S) und der Pixel des digitalen Bildes (2) bezüglich der Oberfläche (3);

b) Definieren der Position ($X_c$, $Y_c$, $Z_c$) im realen Raum (S) der wenigstens einen Fernsehkamera (101);

c) Definieren der Positionen ($X_{V1}$, $Y_{V1}$, $Z_{V1}$, $X_{V2}$, $Y_{V2}$, $Z_{V2}$) im realen Raum (S) der wenigstens drei Scheitelpunkte ($V_1$, $V_2$, $V_3$) der zweidimensionalen Oberfläche des wenigstens einen Beamers (102);

d) für jeden der wenigstens drei Scheitelpunkte ($V_1$, $V_2$, $V_3$) der zweidimensionalen Oberfläche des Beamers (102):

- Berechnen des realen Abstands ($RV_i$) zwischen jedem der Punkte (i) und der Position des Scheitelpunkts ($V_1$, $V_2$, $V_3$);
- Berechnen des realen Abstands ($RC_i$) zwischen jedem der Punkte (i) und der Position der wenigstens einen Fernsehkamera (101);
- Berechnen der Summe ($S_{VC}$) zwischen den beiden realen Abständen ($RV_i$, $RC_i$) für jeden der Punkte (i);
- Identifizieren der Summe ($S_{VCMin}$) mit dem kleinsten Wert unter den berechneten Summen ($S_{VC}$);
- Definieren als realen Reflexionspunkt ($i_r$) des vom Scheitelpunkt ($V_1$, $V_2$, $V_3$) des Beamers (102) kommenden Lichts auf der Oberfläche (3) des realen Objekts (4) den Punkt (i) der Oberfläche (3), in dem die Summe ($S_{VCMin}$) mit dem kleinsten Wert erhalten wird;
- Umwandeln mittels der geometrischen Beziehung des realen Reflexionspunktes ($i_r$), der für den Scheitelpunkt ($V_1$, $V_2$, $V_3$) identifiziert wurde, in einen virtuellen Reflexionspunkt ($p_r$) auf dem digitalen Bild (2);

e) Definieren des interessierenden Bereichs (1) zwischen den wenigstens drei virtuellen Reflexionspunkten ($p_r$).

2. Verfahren nach Anspruch 1, wobei die jeweiligen realen Abstände ($RV_i$, $RC_i$) zwischen jedem Punkt (i), der zu der Oberfläche (3) des realen Objekts (4) gehört, und der realen Position ($X_{V1}$, $Y_{V1}$, $Z_{V1}$, $X_{V2}$, $Y_{V2}$, $Z_{V2}$) jedes Scheitelpunktes ($V_1$, $V_2$, $V_3$) und zwischen jedem der Punkte (i) und der realen Position ($X_c$, $Y_c$, $Z_c$) der Fernsehkamera (101) mittels folgender Formeln berechnet werden:

$$RCi = \sqrt{(Xc - Xi)^2 - (Zc - Zi)^2}$$

$$RVi = \sqrt{(Xvn - Xi)^2 - (Zvn - Zi)^2},$$

wobei $X_c$, $X_{Vn}$, $X_i$ und $Z_c$, $Z_{Vn}$, $Z_i$ jeweils für die realen Koordinaten der Fernsehkamera (101), die realen Koordinaten der n wenigstens drei Scheitelpunkte ($V_1$, $V_2$, $V_3$) und die realen Koordinaten des Punktes (i) der Oberfläche (3) entlang der X-Achse und entlang der Z-Achse stehen.

3. Verfahren nach Anspruch 2, wobei die Bestimmung der realen Koordinate ($Y_{ir}$) entlang der vertikalen Y-Achse des realen Reflexionspunktes ($i_r$), Folgendes umfasst:

    - Projizieren für jeden realen Reflexionspunkt ($i_r$) der Werte der realen Abstände ($RC_i$, $RV_i$) auf die Projektionsebene ($\pi1$), die durch die Y-Achse und durch die Senkrechte zu der Oberfläche (3) definiert wird, um die Werte der projizierten realen Abstände ($RC_i'$, $RV_i'$) zu erhalten;
    - Berechnen der realen Koordinate ($Y_{ir}$) entlang der vertikalen Y-Achse für jeden Reflexionspunkt ($i_r$) mittels folgender Formel:

$$Yir = \frac{YvnRCi' + YcRVi'}{RCi' + RVi'}$$

    wobei $Y_c$ und $Y_{Vn}$ jeweils die realen Koordinaten der Fernsehkamera (101) und die realen Koordinaten jedes der n-ten Scheitelpunkte ($V_1$, $V_2$, $V_3$) entlang der Y-Achse sind.

4. Verfahren nach Anspruch 3, wobei die Werte der projizierten realen Abstände ($RC_i'$, $RV_i'$) durch Definieren des Winkels ($\Delta\theta_{C\pi}$) zwischen der Fernsehkamera (101) und der Projektionsebene ($\pi$) und durch Berechnen der projizierten realen Abstände ($RC_i'$, $RV_i'$) entsprechend der folgenden Formeln erhalten werden:

$$RVi' = RVi\ cos\Delta\theta PVn$$

$$RCi' = RCi\ cos\Delta\theta PVn$$

wobei $\Delta\theta PVn$ für den Winkel zwischen der Projektionsebene ($\pi$) und dem Scheitelpunkt ($V_1$, $V_2$, $V_3$) steht und wobei $\Delta\theta PVn = \Delta\theta CP$ ist.

5. Verfahren nach einem der vorstehenden Ansprüche, wobei der Schritt des Definierens der Positionen im realen Raum (S) der wenigstens drei Scheitelpunkte ($V_1$, $V_2$, $V_3$) des wenigstens einen Beamers (102) für jeden der drei Scheitelpunkte ($V_1$, $V_2$, $V_3$) Folgendes umfasst:

    - Platzieren einer Spiegelfläche (300) in einer ersten Raumposition (P3), so dass die Spiegelfläche (300) im Wesentlichen rechtwinklig zur horizontalen Ebene xz ist und in das Sichtfeld der Fernsehkamera (101) fällt;
    - Erfassen eines ersten digitalen Bildflusses mittels der Fernsehkamera (101) bis ein erstes digitales Bild erfasst wird, in dem der Scheitelpunkt ($V_1$, $V_2$, $V_3$) die vertikale Symmetrieachse ($Y_s$) der Spiegelfläche (300) überlagert, wobei die Überlagerung durch Drehen der Spiegelfläche (300) um die vertikale Symmetrieachse ($Y_s$) in eine erste Winkelposition ($\theta_3$) erhalten wird;
    - Platzieren der Spiegelfläche (300) in einer zweiten Raumposition (P4), die getrennt von der ersten Raumposition (P3) ist, so dass die Spiegelfläche (300) im Wesentlichen rechtwinklig zur horizontalen Ebene xz ist und in das Sichtfeld der Fernsehkamera (101) fällt;
    - Erfassen eines zweiten digitalen Bildflusses mittels der Fernsehkamera (101) bis ein zweites digitales Bild erfasst wird, in dem der Scheitelpunkt ($V_1$, $V_2$, $V_3$) die vertikale Symmetrieachse ($Y_s$) der Spiegelfläche (300) überlagert, wobei die Überlagerung durch Drehen der Spiegelfläche (300) um die vertikale Symmetrieachse ($Y_s$) in eine zweite Winkelposition ($\theta_4$) erhalten wird;
    - sowohl für die ersten als auch die zweiten Bilder Ableiten der virtuellen Koordinaten des Scheitelpunktes ($V_1$, $V_2$, $V_3$) und Ableiten der realen Reflexionswinkel ($\Delta\theta_{Vn\pi}$), die zwischen dem vom Scheitelpunkt ($V_1$, $V_2$, $V_3$) des Beamers (102) erzeugten Lichtstrahl und der Projektionsebene ($\pi$) identifizierbar ist, die durch die vertikale Symmetrieachse ($Y_s$) und die Senkrechte zur Spiegelfläche (300) definiert wird, die in der ersten und der zweiten Position (P3, P4) platziert ist, wobei die realen Reflexionswinkel ($\Delta\theta_{Vn\pi}$) aufgrund der Spiegelreflexionseigenschaft jeweils den realen Winkeln ($\Delta\theta_{C\pi}$) zwischen der Fernsehkamera (101) und der Projektionsebene ($\pi$) in der ersten und in der zweiten Position (P3, P4) entsprechen;
    - Bestimmen der realen Koordinaten ($X_{V1}$, $Y_{V1}$, $Z_{V1}$, $X_{V2}$, $Y_{V2}$, $Z_{V2}$) des Scheitelpunktes ($V_1$, $V_2$, $V_3$) ausgehend von den virtuellen Koordinaten des Scheitelpunktes ($V_1$, $V_2$, $V_3$) und dem realen Reflexionswinkel ($\Delta\theta_{Vn\pi}$), der wenigstens von dem ersten und dem zweiten digitalen Bild abgeleitet ist, mittels eines Triangulationsverfahrens.

6. Verfahren nach Anspruch 5, wobei der Schritt des Bestimmens der realen Koordinaten ($X_{V1}$, $Y_{V1}$, $Z_{V1}$, $X_{V2}$, $Y_{V2}$, $Z_{V2}$) für jeden der drei Scheitelpunkte ($V_1$, $V_2$, $V_3$) Folgendes umfasst:

- Berechnen der Raumkoordinaten ($X_{V1}$, $X_{V2}$, $Z_{V1}$, $Z_{V2}$) entlang der X-Achse und der Z-Achse unter Einsatz eines Triangulationsverfahrens, ausgehend von den virtuellen Koordinaten des Scheitelpunktes ($V_1$, $V_2$, $V_3$) auf den wenigstens zwei digitalen Bildern;
- Ableiten der Raumkoordinate ($Y_{V1}$, $Y_{V2}$) der drei Scheitelpunkte ($V_1$, $V_2$, $V_3$) entlang der Y-Achse:

- Projizieren der Raumkoordinaten ($X_{V1}$, $X_{V2}$, $Z_{V1}$, $Z_{V2}$, $X_c$, $Z_c$) entlang der jeweiligen X-Achse und Z-Achse des Scheitelpunktes ($V_1$, $V_2$, $V_3$) und der Fernsehkamera (101) auf der Projektionsebene ($\pi$), die durch die vertikale Symmetrieachse ($Y_s$) und die Senkrechte zur Spiegelfläche (300) definiert ist, wodurch die projizierten Raumkoordinaten ($X_{V1}'$, $X_{V2}'$, $Z_{V1}'$, $Z_{V2}'$, $X_c'$, $Z_c'$) des Scheitelpunktes ($V_1$, $V_2$, $V_3$) und der Fernsehkamera (101) erhalten werden;
- Berechnen des Abstands ($PV_n'$) zwischen den projizierten Raumkoordinaten ($X_{V1}'$, $X_{V2}'$, $Z_{V1}'$, $Z_{V2}'$) des Scheitelpunktes ($V_1$, $V_2$, $V_3$) und der Spiegelfläche (300) und des Abstands ($PC'$) zwischen den projizierten Raumkoordinaten ($X_c'$, $Z_c'$) der Fernsehkamera (101) und der Spiegelfläche (300);
- Berechnen der Raumkoordinate ($Y_{V1}$, $Y_{V2}$) entlang der Y-Achse mittels folgender Formel:

$$YVn = \frac{PVn\prime}{PC\prime}(Yr - Yc) + Yr,$$

wobei $Y_r$ und $Y_c$ jeweils für den Wert der Raumkoordinaten entlang der Y-Achse des Reflexionspunktes auf der Spiegelfläche (300) des aus dem n-ten der drei Scheitelpunkte ($V_1$, $V_2$, $V_3$) kommenden Lichtstrahls und der Fernsehkamera (101) stehen.

7. Verfahren nach einem der Ansprüche 1 bis 4, wobei der Schritt des Definierens der Positionen im realen Raum (S) der wenigstens drei Scheitelpunkte ($V_1$, $V_2$, $V_3$) des wenigstens einen Beamers (102) Folgendes umfasst:

- Platzieren einer Spiegelfläche (300) in einer ersten Raumposition (P3), so dass die Spiegelfläche (300) im Wesentlichen rechtwinklig zur horizontalen Ebene xz ist und in das Sichtfeld der Fernsehkamera (101) fällt;
- Erfassen eines ersten digitalen Bildflusses mittels der Fernsehkamera (101) bis ein erstes digitales Bild erfasst wird, in dem ein vordefinierter realer Punkt (PP) des Beamers (102) auf dem ersten digitalen Bild unter Überlagerung der vertikalen Symmetrieachse ($Y_s$) der Spiegelfläche (300) positioniert ist, wobei die Überlagerung durch Drehen der Spiegelfläche (300) um die vertikale Symmetrieachse ($Y_s$) in eine erste Winkelposition ($\theta_3$) erhalten wird;
- Platzieren der Spiegelfläche (200) in einer zweiten Raumposition (P4), die getrennt von der ersten Raumposition (P3) ist, so dass die Spiegelfläche (300) im Wesentlichen rechtwinklig zur horizontalen Ebene xz ist und in das Sichtfeld der Fernsehkamera (101) fällt;
- Erfassen eines zweiten digitalen Bildflusses mittels der Fernsehkamera (101) bis ein zweites digitales Bild erfasst wird, in dem der vordefinierte reale Punkt (PP) des Beamers (102) auf dem zweiten digitalen Bild unter Überlagerung der vertikalen Symmetrieachse ($Y_s$) der Spiegelfläche (300) ist, wobei die Überlagerung durch Drehen der Spiegelfläche (300) um die vertikale Symmetrieachse ($Y_s$) in eine zweite Winkelposition ($\theta_4$) erhalten wird;
- sowohl für die ersten als auch die zweiten Bilder Ableiten der virtuellen Koordinaten des vordefinierten Punktes und Ableiten der realen Reflexionswinkel ($\Delta\theta_{PP\pi}$), die zwischen dem vom vordefinierten realen Punkt (PP) des Beamers (102) erzeugten Lichtstrahl und der Projektionsebene ($\pi$) identifizierbar ist, die durch die vertikale Symmetrieachse ($Y_s$) und die Senkrechte zur Spiegelfläche (300) definiert wird, die in der ersten und der zweiten Position (P3, P4) platziert ist, wobei die realen Reflexionswinkel ($\Delta\theta_{PP\pi}$) aufgrund der Spiegelreflexionseigenschaft jeweils den realen Winkeln ($\Delta\theta_{C\pi}$) zwischen der Fernsehkamera (101) und der Projektionsebene ($\pi$) in der ersten und in der zweiten Position (P3, P4) entsprechen;
- Bestimmen der realen Koordinaten des vordefinierten realen Punktes (PP) ausgehend von den virtuellen Koordinaten des vordefinierten realen Punktes (PP) und von dem realen Reflexionswinkel ($\Delta\theta_{PP\pi}$), der wenigstens von dem ersten und dem zweiten digitalen Bild abgeleitet ist, mittels Triangulationsverfahren;
- Berechnen der absoluten realen Position der drei Scheitelpunkte ($V_1$, $V_2$, $V_3$) aufgrund der Kenntnis der realen Koordinaten des vordefinierten realen Punktes (PP) und unter *A-priori*-Kenntnis des realen Abstands zwischen den drei Scheitelpunkten ($V_1$, $V_2$, $V_3$) und dem vordefinierten Punkt.

**8.** Verfahren nach einem der vorstehenden Ansprüche, wobei der Schritt des Definierens der Position ($X_c$, $Y_c$, $Z_c$) im realen Raum (S) der wenigstens einen Fernsehkamera (101) Folgendes umfasst:

- Platzieren einer Oberfläche (200), auf der ein Schachbrettmuster von Elementen (201) in einer ersten Raumposition (P1) definiert ist, so dass die Oberfläche (200) im Wesentlichen rechtwinklig zur horizontalen Ebene xz ist und in das Sichtfeld der Fernsehkamera (101) fällt;
- Erfassen eines ersten digitalen Bildes mittels der Fernsehkamera (101);
- Platzieren der Oberfläche (200), auf der ein Schachbrettmuster von Elementen (201) in einer zweiten Raumposition (P2), getrennt von der ersten Raumposition (P1) definiert ist, so dass die Oberfläche (200) im Wesentlichen rechtwinklig zur horizontalen Ebene xz ist und in das Sichtfeld der Fernsehkamera (101) fällt;
- Erfassen eines zweiten digitalen Bildes mittels der Fernsehkamera (101);
- Berechnen - mittels eines Kalibrieralgorithmus - der realen Koordinaten von wenigstens zwei Elementen des Schachbrettmusters (201) ausgehend von den virtuellen Koordinaten der wenigstens zwei Elemente, die aus dem ersten und dem zweiten digitalen Bild abgeleitet sind, wobei die realen Abmessungen des Schachbrettmusters (201), insbesondere die realen Abstände zwischen den Elementen, bekannt sind.

**9.** Computerprogrammprodukt umfassend einen Softwarecodeabschnitt, der in dem Speicher einer elektronischen Verarbeitungseinrichtung gespeichert ist, um die Schritte des Verfahrens nach einem der Ansprüche 1 bis 8 auszuführen, wenn der Softwarecodeabschnitt in der elektronischen Verarbeitungseinrichtung ausgeführt wird.

## Revendications

**1.** Procédé pour identifier une région d'intérêt (1) dans une image numérique (2) se rapportant à au moins une surface (3) d'un objet réel (4), ladite surface (3) étant du type réfléchissant la lumière, ledit objet réel (4) étant situé dans un espace (S) dans une position prédéfinie ($X_o$, $Y_o$, $Z_o$), où les axes X et Z ayant une origine dans ladite position prédéfinie ($X_o$, $Y_o$, $Z_o$) définissent un plan horizontal xz et l'axe Y représente la direction verticale dans l'espace réel (S), les triades de coordonnées spatiales ($X_i$, $Y_i$, $Z_i$) de chaque point (i) appartenant à ladite surface (3) par rapport à ladite position prédéfinie ($X_o$, $Y_o$, $Z_o$) étant connues *a priori,* l'acquisition de ladite image numérique (2) étant effectuée au moyen d'un système de vision artificielle (100) comprenant au moins une caméra de télévision (101) configurée pour acquérir ladite image numérique (2) et au moins un illuminateur (102) muni d'une surface bidimensionnelle comprenant au moins trois points de sommet ($V_1$, $V_2$, $V_3$), ladite surface bidimensionnelle étant configurée pour émettre un rayonnement de lumière afin d'illuminer au moins partiellement ladite surface (3) dudit objet réel (4), **caractérisé en ce qu'**il comprend les opérations suivantes:

a) exécuter une étape d'étalonnage pour déterminer la relation géométrique existant entre lesdits points (i) de ladite surface (3) dudit objet réel (4) dans l'espace réel (S) et les pixels de ladite image numérique (2) se rapportant à ladite surface (3);

b) définir la position ($X_c$, $Y_c$, $Z_c$) dans l'espace réel (S) de ladite au moins une caméra de télévision (101);

c) définir les positions ($X_{V1}$, $Y_{V1}$, $Z_{V1}$, $X_{V2}$, $Y_{V2}$, $Z_{V2}$) dans l'espace réel (S) desdits au moins trois points de sommet ($V_1$, $V_2$, $V_3$) de ladite surface bidimensionnelle dudit au moins un illuminateur (102);

d) pour chacun desdits au moins trois points de sommet ($V_1$, $V_2$, $V_3$) de ladite surface bidimensionnelle dudit illuminateur (102):

- calculer la distance réelle ($RV_i$) entre chacun desdits points (i) et la position dudit point de sommet ($V_1$, $V_2$, $V_3$);
- calculer la distance réelle ($RC_i$) entre chacun desdits points (i) et la position de ladite au moins une caméra de télévision (101);
- calculer la somme ($S_{VC}$) entre lesdites deux distances réelles ($RV_i$, $RC_i$) pour chacun desdits points (i);
- identifier la somme ($S_{VCMin}$) ayant la valeur la plus faible parmi lesdites sommes calculées ($S_{VC}$);
- définir, comme point de réflexion réel ($i_r$) de la lumière provenant dudit point de sommet ($V_1$, $V_2$, $V_3$) dudit illuminateur (102) sur la surface (3) dudit objet réel (4), le point (i) de ladite surface (3) au niveau duquel ladite somme ($S_{VCMin}$) ayant la valeur la plus faible est obtenue;
- convertir, au moyen de ladite relation géométrique, ledit point de réflexion réel ($i_r$) identifié pour ledit point de sommet ($V_1$, $V_2$, $V_3$) en un point de réflexion virtuel ($p_r$) dans ladite image numérique (2);

e) définir ladite région d'intérêt (1) entre lesdits au moins trois points de réflexion virtuels ($p_r$).

**2.** Procédé selon la revendication 1, dans lequel lesdites distances réelles ($RV_i$, $RC_i$) respectivement entre

chaque point (i) appartenant à ladite surface (3) dudit objet réel (4) et la position réelle ($X_{V1}$, $Y_{V1}$, $Z_{V1}$, $X_{V2}$, $Y_{V2}$, $Z_{V2}$) de chacun desdits points de sommet ($V_1$, $V_2$, $V_3$) et entre chacun desdits points (i) et la position réelle ($X_c$, $Y_c$, $Z_c$) de ladite caméra de télévision (101) sont calculées au moyen des formules suivantes:

$$RCi = \sqrt{(Xc - Xi)^2 - (Zc - Zi)^2}$$

$$RVi = \sqrt{(Xvn - Xi)^2 - (Zvn - Zi)^2},$$

où $X_c$, $X_{Vn}$, $X_i$ et $Z_c$, $Z_{Vn}$, $Z_i$ représentent respectivement les coordonnées réelles de ladite caméra de télévision (101), les coordonnées réelles de chacun des n au moins trois points de sommet ($V_1$, $V_2$, $V_3$) et les coordonnées réelles dudit point (i) de ladite surface (3) le long de l'axe X et le long de l'axe Z.

3. Procédé selon la revendication 2, dans lequel la définition de la coordonnée réelle ($Y_{ir}$) le long de l'axe vertical Y dudit point de réflexion réel ($i_r$) consiste à:

 - projeter pour chaque point de réflexion réel ($i_r$) les valeurs desdites distances réelles ($RC_i$ $RV_i$) sur le plan de projection ($\pi1$) défini par ledit axe Y et par la normale à ladite surface (3) afin d'obtenir les valeurs desdites distances réelles projetées ($RC_i'$, $RV_i'$);
 - calculer ladite coordonnée réelle ($Y_{ir}$) le long de l'axe vertical Y pour chaque point de réflexion ($i_r$) au moyen de la formule:

$$Yir = \frac{YvnRCi' + YcRVi'}{RCi' + RVi'}$$

où $Y_c$ et $Y_{Vn}$ sont respectivement les coordonnées réelles de la caméra de télévision (101) et les coordonnées réelles de chacun des n$^{\text{ièmes}}$ points de sommet ($V_1$, $V_2$, $V_3$) le long de l'axe Y.

4. Procédé selon la revendication 3, dans lequel les valeurs desdites distances réelles projetées ($RC_i'$, $RV_i'$) sont obtenues en définissant l'angle ($\Delta\theta_{C\pi}$) entre ladite caméra de télévision (101) et ledit plan de projection ($\pi$) et en calculant lesdites distances réelles projetées ($RC_i'$, $RV_i'$) selon les formules:

$$RVi' = RVi\, cos\Delta\theta PVn$$

$$RCi' = RCi\, cos\Delta\theta PVn$$

où $\Delta\theta PVn$ représente l'angle entre ledit plan de pro-

jection ($\pi$) et ledit point de sommet ($V_1$, $V_2$, $V_3$) et où $\Delta\theta PVn = \Delta\theta CP$.

5. Procédé selon l'une quelconque des revendications précédentes, dans lequel ladite étape de définition des positions dans l'espace réel (S) d'au moins lesdits trois points de sommet ($V_1$, $V_2$, $V_3$) dudit au moins un illuminateur (102) consiste à, pour chacun desdits trois points de sommet ($V_1$, $V_2$, $V_3$):

 - placer une surface de miroir (300) dans une première position spatiale (P3) de sorte que ladite surface de miroir (300) est sensiblement orthogonale audit plan horizontal xz et se trouve à l'intérieur du champ de vision de ladite caméra de télévision (101);
 - acquérir un premier flux d'images numériques au moyen de ladite caméra de télévision (101) jusqu'à l'acquisition d'une première image numérique dans laquelle ledit point de sommet ($V_1$, $V_2$, $V_3$) est en superposition avec l'axe de symétrie vertical ($Y_s$) de ladite surface de miroir (300), ladite superposition étant obtenue en tournant ladite surface de miroir (300) autour dudit axe de symétrie vertical ($Y_s$) dans une première position angulaire ($\theta_3$);
 - placer ladite surface de miroir (300) dans une deuxième position spatiale (P4), distincte de ladite première position spatiale (P3), de sorte que ladite surface de miroir (300) est sensiblement orthogonale audit plan horizontal xz et se trouve à l'intérieur du champ de vision de ladite caméra de télévision (101);
 - acquérir un deuxième flux d'images numériques au moyen de ladite caméra de télévision (101) jusqu'à l'acquisition d'une deuxième image dans laquelle ledit point de sommet ($V_1$, $V_2$, $V_3$) est en superposition avec ledit axe de symétrie vertical ($Y_s$) de ladite surface de miroir (300), ladite superposition étant obtenue en tournant ladite surface de miroir (300) autour dudit axe de symétrie vertical ($Y_s$) dans une deuxième position angulaire ($\theta_4$);
 - pour à la fois lesdites première et deuxième images, dériver les coordonnées virtuelles dudit point de sommet ($V_1$, $V_2$, $V_3$) et dériver les angles de réflexion réels ($\Delta\theta_{Vn\pi}$) identifiables entre le faisceau de lumière originaire dudit point de sommet ($V_1$, $V_2$, $V_3$) dudit illuminateur (102) et le plan de projection ($\pi$) défini par ledit axe de symétrie vertical ($Y_s$) et par la normale à ladite surface de miroir (300) placée dans ladite première et dans ladite deuxième position (P3, P4), où lesdits angles de réflexion réels ($\Delta\theta_{Vn\pi}$) correspondent respectivement aux angles réels ($\Delta\theta_{C\pi}$) entre ladite caméra de télévision (101) et ledit plan de projection ($\pi$) dans ladite première et dans ladite deuxième position (P3, P4), en raison de la propriété de réflexion de miroir;
- déterminer les coordonnées réelles ($X_{V1}$, $Y_{V1}$, $Z_{V1}$, $X_{V2}$, $Y_{V2}$, $Z_{V2}$) dudit point de sommet ($V_1$, $V_2$, $V_3$) en débutant à partir desdites coordonnées virtuelles dudit point de sommet ($V_1$, $V_2$, $V_3$) et à partir dudit angle de réflexion réel ($\Delta\theta_{Vn\pi}$) dérivé au moins à partir de ladite première et de ladite deuxième image numérique, au moyen d'un procédé de triangulation.

6. Procédé selon la revendication 5, dans lequel ladite opération de détermination desdites coordonnées réelles ($X_{V1}$, $Y_{V1}$, $Z_{V1}$, $X_{V2}$, $Y_{V2}$, $Z_{V2}$) pour chacun desdits trois points de sommet ($V_1$, $V_2$, $V_3$) consiste à:

- calculer les coordonnées spatiales ($X_{V1}$, $X_{V2}$, $Z_{V1}$, $Z_{V2}$) le long des axes X et Z à l'aide d'un procédé de triangulation en débutant à partir desdites coordonnées virtuelles dudit point de sommet ($V_1$, $V_2$, $V_3$) dans lesdites au moins deux images numériques;
- dériver la coordonnée spatiale ($Y_{V1}$, $Y_{V2}$) desdits trois points de sommet ($V_1$, $V_2$, $V_3$) le long de l'axe Y:

- en projetant les coordonnées spatiales ($X_{V1}$, $X_{V2}$, $Z_{V1}$, $Z_{V2}$, $X_c$, $Z_c$) le long des axes X et Z respectivement dudit point de sommet ($V_1$, $V_2$, $V_3$) et de ladite caméra de télévision (101) sur le plan de projection ($\pi$) défini par ledit axe de symétrie vertical ($Y_s$) et par la normale à ladite surface de miroir (300) pour obtenir les coordonnées spatiales projetées ($X_{V1}'$, $X_{V2}'$, $Z_{V1}'$, $Z_{V2}'$, $X_c'$, $Z_c'$) dudit point de sommet ($V_1$, $V_2$, $V_3$) et de ladite caméra de télévision (101);
- en calculant la distance ($PV_n'$) entre lesdites coordonnées spatiales projetées ($X_{V1}'$, $X_{V2}'$, $Z_{V1}'$, $Z_{V2}'$) dudit point de sommet ($V_1$, $V_2$, $V_3$) et ladite surface de miroir (300) et la distance ($PC'$) entre lesdites coordonnées spatiales projetées ($X_c'$, $Z_c'$) de ladite caméra de télévision (101) et ladite surface de miroir (300);
- en calculant la coordonnée spatiale ($Y_{V1}$, $Y_{V2}$) le long de l'axe Y au moyen de la formule:

$$YVn = \frac{PVn'}{PC'}(Yr - Yc) + Yr,$$

où $Y_r$ et $Y_c$ représentent respectivement la valeur des coordonnées spatiales le long de l'axe Y du point de réflexion sur ladite surface de miroir (300) du faisceau de lumière provenant du n$^{ième}$ desdits trois

points de sommet ($V_1$, $V_2$, $V_3$) et de ladite caméra de télévision (101).

7. Procédé selon l'une quelconque des revendications 1 à 4, dans lequel ladite étape de définition des positions dans l'espace réel (S) d'au moins lesdits trois points de sommet ($V_1$, $V_2$, $V_3$) dudit au moins un illuminateur (102) consiste à:

- placer une surface de miroir (300) dans une première position spatiale (P3) de sorte que ladite surface de miroir (300) est sensiblement orthogonale audit plan horizontal xz et se trouve à l'intérieur du champ de vision de ladite caméra de télévision (101);
- acquérir un premier flux d'images numériques au moyen de ladite caméra de télévision (101) jusqu'à l'acquisition d'une première image numérique dans laquelle un point réel prédéfini (PP) dudit illuminateur (102) est positionné sur ladite première image numérique en superposition avec l'axe de symétrie vertical ($Y_s$) de ladite surface de miroir (300), ladite superposition étant obtenue en tournant ladite surface de miroir (300) selon ledit axe de symétrie vertical ($Y_s$) dans une première position angulaire ($\theta_3$);
- placer ladite surface de miroir (200) dans une deuxième position spatiale (P4), distincte de ladite première position spatiale (P3) de sorte que ladite surface de miroir (300) est sensiblement orthogonale audit plan horizontal xz et se trouve à l'intérieur du champ de vision de ladite caméra de télévision (101);
- acquérir un deuxième flux d'images numériques au moyen de ladite caméra de télévision (101) jusqu'à l'acquisition d'une deuxième image dans laquelle ledit point réel prédéfini (PP) dudit illuminateur (102) est sur ladite deuxième image numérique en superposition avec l'axe de symétrie vertical ($Y_s$) de ladite surface de miroir (300), ladite superposition étant obtenue en tournant ladite surface de miroir (300) selon ledit axe de symétrie vertical ($Y_s$) dans une deuxième position angulaire ($\theta_4$);
- pour à la fois lesdites première et deuxième images, dériver les coordonnées virtuelles dudit point prédéfini et dériver les angles de réflexion réels ($\Delta\theta_{PP\pi}$) identifiables entre le faisceau de lumière originaire dudit point réel prédéfini (PP) dudit illuminateur (102) et le plan de projection ($\pi$) défini par ledit axe de symétrie vertical ($Y_s$) et par la normale à ladite surface de miroir (300) placée dans ladite première et dans ladite deuxième position (P3, P4), où lesdits angles de réflexion réels ($\Delta\theta_{PP\pi}$) correspondent respectivement aux angles réels ($\Delta\theta_{C\pi}$) entre ladite caméra de télévision (101) et ledit plan de projection ($\pi$) dans ladite première et dans ladite deuxième position (P3, P4), en raison de la propriété de réflexion de miroir;

- déterminer les coordonnées réelles dudit point réel prédéfini (PP) en débutant à partir desdites coordonnées virtuelles dudit point réel prédéfini (PP) et à partir dudit angle de réflexion réel ($\Delta\theta_{PP_\pi}$) dérivé au moins à partir de ladite première et de ladite deuxième image numérique, au moyen d'un procédé de triangulation;

- calculer la position réelle absolue desdits trois points de sommet ($V_1$, $V_2$, $V_3$) en connaissant les coordonnées réelles dudit point réel prédéfini (PP) et en connaissant *a priori* la distance réelle entre lesdits trois points de sommet ($V_1$, $V_2$, $V_3$) et ledit point prédéfini.

8. Procédé selon l'une quelconque des revendications précédentes, dans lequel ladite opération de définition de la position ($X_c$, $Y_c$, $Z_c$) dans l'espace réel (S) de ladite au moins une caméra de télévision (101) consiste à:

- placer une surface (200) sur laquelle un damier d'éléments (201) est défini dans une première position spatiale (P1) de sorte que ladite surface (200) est sensiblement orthogonale audit plan horizontal xz et se trouve à l'intérieur du champ de vision de ladite caméra de télévision (101);
- acquérir une première image numérique au moyen de ladite caméra de télévision (101);
- placer ladite surface (200), sur laquelle est défini ledit damier d'éléments (201), dans une deuxième position spatiale (P2), distincte de ladite première position spatiale (P1), de sorte que ladite surface (200) est sensiblement orthogonale audit plan horizontal xz et se trouve à l'intérieur du champ de vision de ladite caméra de télévision (101);
- acquérir une deuxième image numérique au moyen de ladite caméra de télévision (101);
- au moyen d'un algorithme d'étalonnage, calculer les coordonnées réelles d'au moins deux éléments dudit damier (201) en débutant à partir des coordonnées virtuelles desdits au moins deux éléments dérivés à partir de ladite première et de ladite deuxième image numérique et les dimensions réelles dudit damier (201) étant connues, en particulier les distances réelles entre lesdits éléments.

9. Produit de programme informatique comprenant une partie de code logiciel chargée dans la mémoire d'un dispositif de traitement électronique pour effectuer les opérations du procédé selon l'une quelconque des revendications 1 à 8 lorsque ladite partie de code logiciel est exécutée dans ledit dispositif de traitement électronique.

Fig.1

Fig.2a

Fig.2b

Fig.3

Fig.4

X

S

$P_3$

300

$P_4$

300

$V_2 (X_{v2}, Y_{v2}, Z_{v2})$

$V_1 (X_{v1}, Y_{v1}, Z_{v1})$

Z

102

Fig.5

101

$Y_s$

$V_1$

Fig.6

$Y_s$

$\Delta\Theta_{v_n}\pi$

$Z$

$V_n\ (X_{i_n}\ ;Z_{r_n}\ )$

$(X_{v_n}';Y_{v_n}')$

$\Delta\Theta_c\ \pi$

$(X'_c,Z'_c)$

$(X_c,Z_c)$

$\pi$

$X$

101

**Fig.7**

$Y_c$ $\overline{PC'}$

$(X_c,Z_c)$

$I_r$ $Y_r$

$\pi$

$Y_{v_n}$ $Y_{v_n}'PV_n'$ $(X'_i\ ;Z'_i)$

$Y$

**Fig.8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2251268 A
- DE 102004040164

- WO 2016155848 A